# EUROPEAN PATENT APPLICATION

(11) **EP 0 822 513 A2**
(43) Date of publication of application: **04.02.1998**
(21) Application number: 97202272.7
(22) Date of filing: 21.07.1997
(51) Int. Cl.: G06K 19/06

(54) **Magnetically encodable card having improved security features**

(30) Priority: 01.08.1996 US 690150
(71) Applicant: EASTMAN KODAK COMPANY, Rochester, New York 14650 (US)
(72) Inventor: Chamberlain, Frederick Rockwell, IV, Rochester, New York 14650-2201 (US); Burg, Greg A., Rochester, New York 14650-2201 (US)
(74) Representative: Lewandowsky, Klaus, Dipl.-Ing.

(57) **Abstract**

A magnetically encodable card comprising:
a body having first and second surfaces and first and second parallel side edges and third and fourth parallel end edges; the body being formed of plastic material having magnetic particles uniformly dispersed throughout the plastic material; and
at least one magnetic data track recorded on one of the first and second surfaces, the magnetic data track not being parallel to any of the first, second, third, or fourth edges.

## Description

### Field of Invention

The invention relates in general to magnetically encodable cards such as credit cards, debit cards, personal I.D. cards, employee security passes, door access cards, plastic money, chip cards for casinos, etc. More particularly this invention relates to a new and improved magnetically encodable card of solid plastic, having magnetic particles uniformly dispersed throughout the plastic card and having improved security features.

### Background of the Invention

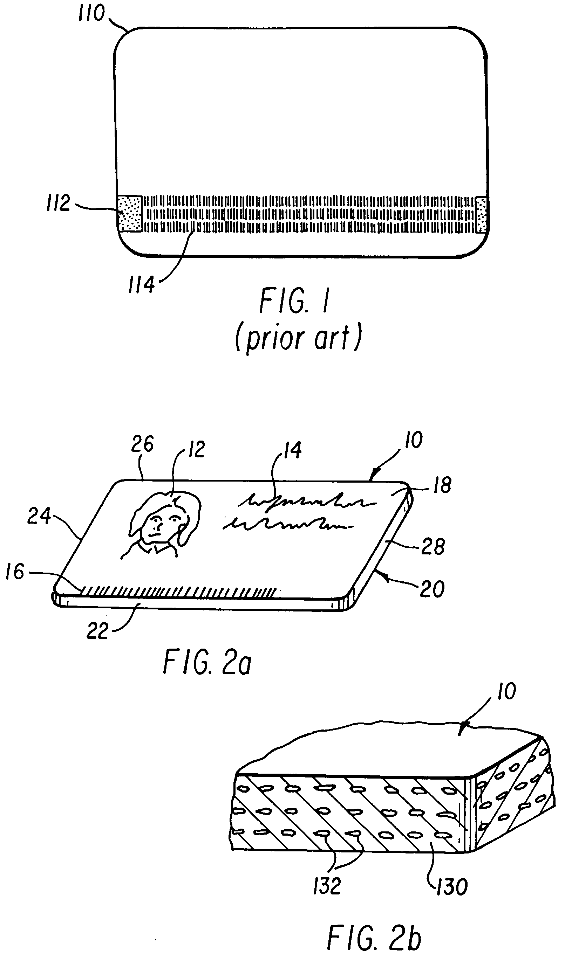

Magnetically encoded cards, such as credit cards, debit cards, personal identification cards, employee passes, security cards, door access cards, plastic money, casino chip cards, etc., have typically contained a magnetic stripe on the back, to record magnetically encoded data. Fig. 1 shows such a magstripe card which includes a card 110 having a magnetic stripe 112 which is encoded with flux transitions 114. Such data can, for example, include the credit or debit card number, a personal identification number, an employee number, an access code, a security code, graphics, photo, money limits, as well as other information relating to the person and to the application of the card. One disadvantage of using a magnetic stripe is that it is clearly visible and easy to change or erase the recorded information. Another disadvantage is that continued use of the card by swiping the magnetic stripe through a reader causes degradation of the magnetic stripe and information recorded thereon. A further disadvantage is the limited recording capacity of the single magnetic stripe. In addition, the magnetic stripe can delaminate from the card, rendering the card useless. Moreover, the data is relatively insecure and may be copied quickly and easily by a person who obtains momentary possession of the card since data is written to widely known industry standards. The means to do this copying include use of a standard card reader, contact duplication, and optically imaging the data using a magnetic viewer or magnetic fluid.

There is thus a problem in providing a magnetically encodable card which is simple and inexpensive to manufacture, which has a long life without degradation of the magnetic layer or data recorded thereon, which provides improved security features and which makes it difficult to surreptitiously scan data from the card.

### Summary of the Invention

According to the present invention, there is provided a solution to the problems of the prior art.

A feature of the invention is to provide a virtually unlimited number of magnetically encodable card systems which have unique recording formats. This is made possible by the fact that magnetic recording can be done anywhere on the card surface, as opposed to just along the magstripe of a conventional card.

An additional feature of the invention is to provide methods of using decoy and noise data which will make any attempt to surreptitiously scan data from such a magnetically encodable card extremely difficult.

Yet another feature of the invention is to provide encoders and readers. The only way to read a card of this invention will be with a reader specifically designed for it. Such a system of a card and reader will provide a higher level of security than one employing standard magstripe cards and readers.

According to an aspect of the present invention, there is provided a system including a magnetic data writer and a magnetic data reader and a magnetically encodable card comprising:
a body having first and second surfaces and first and second parallel side edges and third and fourth parallel end edges; the body being formed of plastic material having magnetic particles uniformly dispersed throughout the plastic material; and
at least one magnetic data track recorded on one of the first and second surfaces, the magnetic data track not being parallel to any of the first, second, third, or fourth edges.

### Advantageous Effect of the Invention

The invention has the following advantages.
1. A magnetically encodable card is provided which is simple and inexpensive to manufacture, which has a long life without degradation of a magnetic layer or data recorded thereon, which eliminates delamination, and which provides increased data recording capacity.
2. A magnetically encodable card is provided which provides improved security features and which makes it difficult to surreptitiously scan data from the card.
3. A system is provided including a magnetically encodable card having the advantages listed in paragraphs 1 and 2 above and further including a magnetic data writer and a magnetic data reader for such card.

### Brief Description of the Drawings

Fig. 1 is a diagrammatic view of a card having a magstripe.

Figs. 2a-2d are diagrammatic views of a magnetically encodable card having magnetic data tracks parallel to an edge of the card.

Figs. 3-8 are diagrammatic views showing different embodiments of the present invention.

### Detailed Description of the Invention

Referring now to Figure 2a, there is shown a magnetically encodable card 10. Card 10 can encode any data, graphics, photos, etc., and can be used for any applications. Exemplary applications are a credit card, a debit card, a driver's license, an employee or personal I.D. card, security pass, door access card, plastic money, chip card for casino gambling, transportation card, etc. The card 10 can include printed matter on a surface thereof such as a photograph 12, written material 14, or a bar code 16. In general, card 10 includes first and second rectangular, elongated faces 18 and 20, and edges 22, 24, 26, and 28. Side edges 22 and 26 are parallel to each other and end edges 24 and 28 are parallel to each other.

Card 10 (Fig. 2b) is formed from solid plastic material 130 having magnetic particles 132 uniformly dispersed throughout the volume of card 10. Magnetic particles 132 may be of a high coercivity material such as barium ferrite or strontium ferrite, of a medium coercivity material, such as is used in the magnetic stripes of conventional ID cards or a very soft low coercivity material. Magnetic particles 132 may also be a mixture of low and high coercivity magnetic materials for recording of easy to erase and hard to erase data. Magnetic particles 32 may be made of materials having low and/or high Curie temperatures (T_{c}).

Any suitable ferromagnetic particle may be employed such as, for example, gamma-Fe₂O₃, cobalt-gamma-Fe₂O₃, Co-magnetite; ferromagnetic chromium dioxide, ferromagnetic metal particles, ferromagnetic alloy particles, barium ferrite, strontium ferrite, and mixtures thereof, and the like. It is preferred that the magnetic particles have a coercivity greater than 3000 Oe, therefore, barium ferrite and strontium ferrite are preferred. It is also preferred that the volume of magnetic particle in the card be in a range from substantially 0.001 percent to substantially 0.1 percent and most preferably in a range from substantially 0.01 percent to substantially 0.03 percent based upon the volume of the resin employed in making the card. The low loading of the magnetic particles into the resin from which the card is formed in these small percentages also gives low remanant fields and prevents the card made in accordance with this invention from use for duplicating or counterfeiting.

Any suitable thermoplastic resin may be employed as plastic material 130, such as, for example, polystyrene, polyamides, homo and copolymers of vinylchloride, polycarbonates, homo and copolymers of polyolefins, and polyesters.

Suitable metal oxide or mixtures of oxides may be added in order to provide a bright white reflective surface suitable for receiving indicia, images, and the like including, titanium dioxide either in the anatase or rutile form, zinc oxide, silica, oxides of aluminum, zirconium oxide, tin oxides, and nacreous pigments, such as mica/titanium dioxide or bismuth oxychloride. The plastic material 130 may also have dispersed therein particles that impart abrasion resistance and durability to the surface of the card for cleaning magnetic transducer heads so that digital information may be exchanged more reliably.

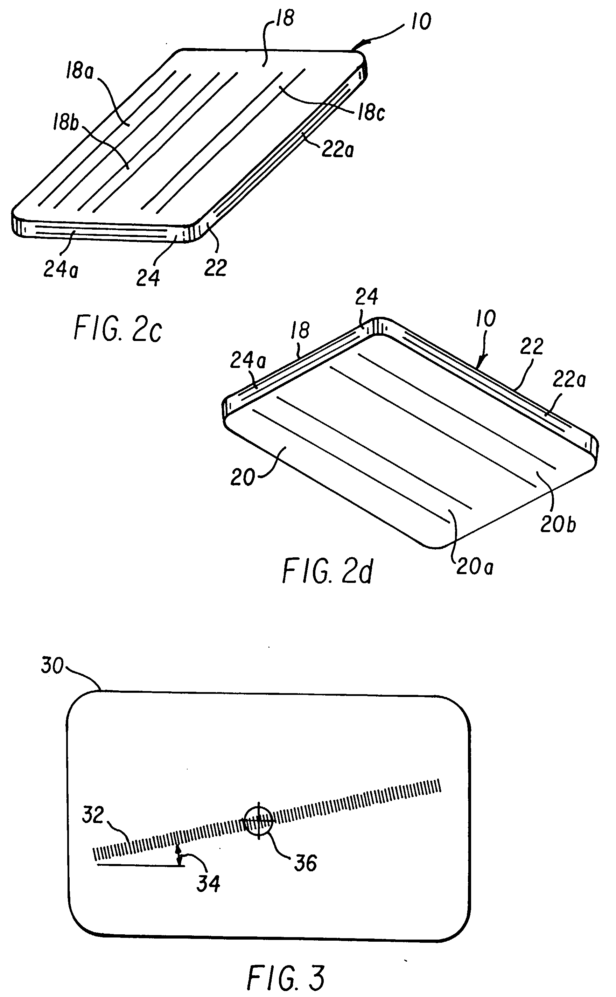

Since the magnetic particles 132 are uniformly distributed throughout the volume of plastic 130, magnetic information can be recorded at any region on either face 18 or 20 thereof. Thus, instead of the limited recording area provided by the magnetic stripe on a conventional card, a number of magnetic tracks can be provided on either or both surfaces 18 and 20 of card 10. Thus, as shown in Figure 2c, card 10 has three tracks 18a, 18b, and 18c on face 18, and (Fig. 2d) two tracks 20a, and 20b on face 20.

Because the magnetic particles 132 are uniformly dispersed throughout plastic material 130 of card 10, data can also be recorded along the edges 22, 24, 26 and 28 of card 10. Thus, as shown in Figs. 2c and 2d, transverse edge 24 has a magnetic track 24a and longitudinal edge 22 has a longitudinal track 22a. It will be understood that data can also be recorded along edges 26 and 28.

Fig. 3 shows one embodiment of the present invention. A magnetically encodable card 30 is encoded with data track 32 at angle 34. A reader for such a card system can follow such a track by either moving the card at an angle relative to a fixed MR (magnetoresistive) head or by translating the head as the card is inserted. Both of these methods are discussed below. It should be noted that if the center of data track 32 is located coincident with the center 36 of card 30, then the card may be inserted from either direction, because the track location is symmetrical. The card 30 may be recorded with the track on both sides, giving it an orientation invariant property.

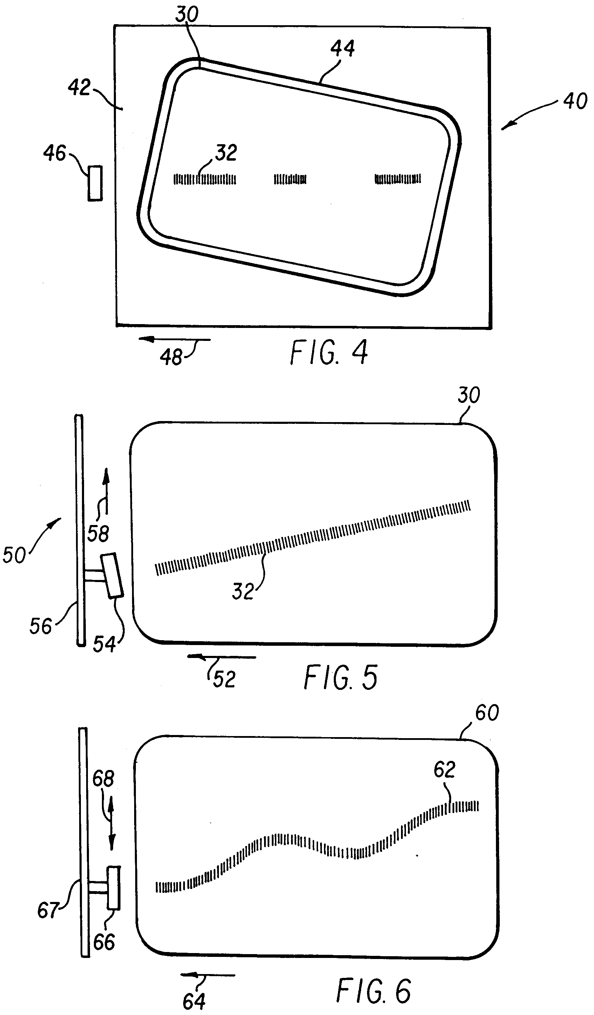

Fig. 4 shows a reader 40 which operates by accepting a card 30 onto platen 42 with angular cutout 44, which then translates under read head 46 in the direction 48. The card 30 would be accepted into the reader 40 through a slot in the normal fashion, as in an ATM machine, before being placed in the platen 42, preventing unauthorized persons from observing the angle at which the data is recorded. A large number of systems can be provided by making different platens which hold the cards at different angles. Should the security of a particular system be compromised, it can easily be updated by changing out cards and picking a new platen component with a different angles. An encoder for the system is built by replacing the read head 46 with a write head.

Fig. 5 shows a second type of reader 50. As card 30 is inserted and pulled in direction 52, read head 54 is translated in direction 58 by mechanism 56, in such a way that read head 54 tracks over the data on card 30. The mechanism 56 must be designed to operate smoothly without jitter to enable reliable decoding of the data. While this type of reader is more difficult to implement than the first, it allows even more complicated and therefore secure data tracks to be used.

Fig. 6 shows a complex track 62 on magnetically encodable card 60. As the card is moved in direction 64, read head 66 is moved by mechanism 67 as indicated by arrows 68 to follow data track 62. It will be appreciated that these curved tracks that also be made symmetrical about the card center and recorded on both sides, so as to provide invariance to insertion orientation.

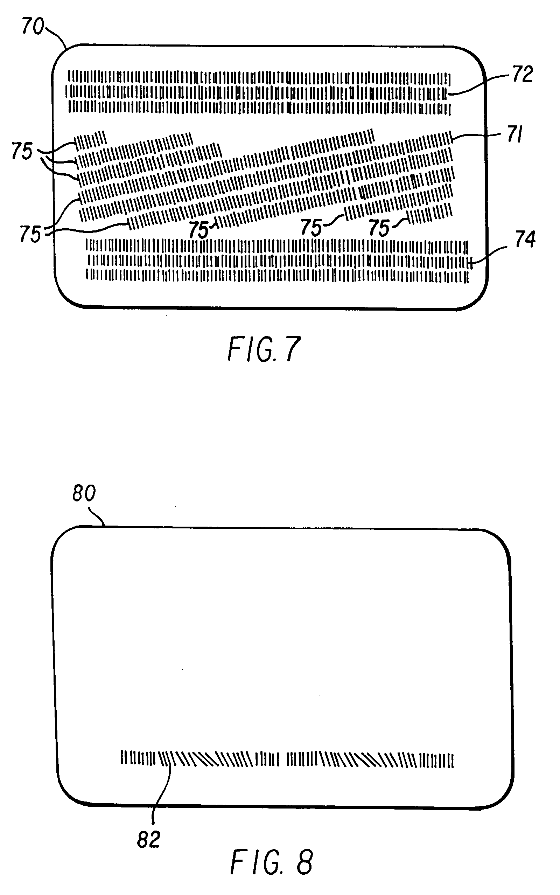

To impede the unauthorized reading of the card, garbage data and/or decoy data may be placed on the card. Fig. 7 shows such a card 70, with read data track 71. Decoy tracks 72 and 74 are encoded onto the card, for the sole purpose of fooling a counterfeiter that he has successfully read the card. Garbage data tracks 75 are written to the card to make scanning the card to find the read data very difficult.

Fig. 8 shows yet another embodiment of the invention, in which the azimuth angle of the data track 82 on card 80 is changed over the track length. This embodiment will operate on either a card of the invention or on a standard magstripe card, and has the advantage that the card may be swiped through a reader guided by the edge of the card. The head azimuth must be varied as the card moves through the reader, to follow the data. If a nonrotating read head is used, or if the variation of angle is incorrect, it will be impossible to read the data.

For proper operation of a hand swipe reader, an automatic adjustment of the head angle irrespective of the variability in the swipe speed is needed. The azimuth angle control may be provided by many different means, including using an encoder wheel in contact with the card, or using a standard magnetic track with position data parallel to the high security track.

The invention has been described in detail with particular reference to a preferred embodiment thereof, but it will be understood that variations and modifications can be effected within the spirit and scope of the invention.

### Parts List

- 10: magnetically encodable card
- 12: photograph
- 14: written material
- 16: bar code
- 18,20: face
- 18a,18b,18c,20a,20b: magnetic data tracks
- 22,24,26,28: edge
- 30: magnetically encodable card
- 32: data track
- 34: angle
- 36: center
- 40: reader
- 42: platen
- 44: angular cutout
- 46: read head
- 48: direction
- 50: reader
- 52: direction
- 54: read head
- 56: mechanism
- 58: direction
- 60: magnetically encodable card
- 62: complex track
- 64: direction
- 66: read head
- 67: mechanism
- 68: arrows
- 70: magnetically encodable card
- 71: read data track
- 72,74: decoy tracks
- 75: garbage data tracks
- 80: card
- 82: data track
- 110: card
- 112: magnetic stripe
- 114: flux transitions
- 130: solid plastic material
- 132: magnetic particles

## Claims

1. A magnetically encodable card comprising:
a body having first and second surfaces and first and second parallel side edges and third and fourth parallel end edges; said body being formed of plastic material having magnetic particles uniformly dispersed throughout the plastic material; and
at least one magnetic data track recorded on one of said first and second surfaces, said magnetic data track not being parallel to any of said first, second, third, or fourth edges.

2. The magnetically encodable card of claim 1 wherein said magnetic data track is linear and is centered coincident with the center of said body.

3. The magnetically encodable card of claim 1 wherein said magnetic data track is nonlinear.

4. The magnetically encodable card of claim 3 wherein said nonlinear magnetic data track is centered coincident with the center of said body and is rotationally symmetric about the center of said body.

5. The magnetically encodable card of claim 1 including at least another magnetic data track recorded on one of said first and second surfaces, wherein the data recorded on said at least one magnetic data track is real data and wherein said data recorded on said at least another magnetic data track is fake or superfluous to improve the security of the real data recorded on said at least one magnetic data track.

6. The magnetically encodable card of claim 1 wherein said at least one magnetic data track is recorded with an azimuth angle that changes over the track length.

7. The magnetically encodable card of claim 1 including magnetic data writer which writes said at least one magnetic data track on said one of said first and second surfaces of said body of said card and further including a magnetic data reader for reading said at least one magnetic data track.

8. The magnetically encodable card of claim 7 wherein said magnetic data reader employs a magnetoresistive read head.
